# FASCICULE DE BREVET EUROPEEN

(11) **EP 1 402 093 B1**
(45) Date de publication et mention de la délivrance du brevet: **17.05.2006**
(21) Numéro de dépôt: 02782422.6
(22) Date de dépôt: 03.07.2002
(51) Int. Cl.: D01F 9/08, C03C 3/06, C03C 13/00

(54) **FIL DE SILICE POUR TEXTILE A HAUTE TENUE THERMIQUE**
GARN AUS SILICIUMDIOXID FÜR TEXTILIEN MIT HOHER TEMPERATURSTABILITÄT
SILICA YARN FOR TEXTILE WITH HIGH THERMAL RESISTANCE

(30) Priorité: 04.07.2001 FR 0108853
(43) Date de publication de la demande: 31.03.2004
(73) Titulaire: Saint-Gobain Quartz S.A.S., 92400 Courbevoie (FR)
(72) Inventeur: MOLINS, Laurent, F-77460 Souppes sur Loing (FR)
(74) Mandataire: Colombier, Christian
(86) Numéro de dépôt international: PCT/FR2002/002315
(87) Numéro de publication internationale: WO 2003/004739

(56) Documents cités:
- EP-A- 0 160 232
- EP-A- 0 510 653
- FR-A- 1 172 142
- US-A- 3 092 531

## Description

L'invention concerne un fil de silice, des textiles tissés ou non-tissés réalisés à partir dudit fil (ou " fibre "), ce fil étant susceptible d'être obtenu par le procédé qui consiste à étirer mécaniquement une préforme de silice fondue dans une flamme.

Pour des applications à haute température (joints de fours, rideaux de fours, rideaux de soudure, protection ablative), c'ést-à-dire généralement au-delà de 600°C, on recherche des fils ayant la meilleure stabilité possible, permettant la confection de textiles conservant bien leurs propriétés mécaniques malgré les nombreux cycles de chauffage-refroidissement, et notamment leur flexibilité. En effet, un textile qui se raidit lorsqu'il est soumis à des cycles chauffage-refroidissement devient cassant et n'a pas la même durée de vie qu'un textile conservant mieux sa souplesse au cours de son utilisation.

Pour ce type d'application, on peut utiliser des textiles réalisés à partir de verre lavé. Pour ce type de matériau, on part généralement d'un fil de verre E (ou de compositions verrières adaptées généralement très riches en silice) que l'on tisse ou tresse et auquel on fait ensuite subir un lavage par des acides (par exemple l'acide sulfurique ou l'acide nitrique) de façon à faire baisser le taux d'impureté de la silice. Compte tenu du très fort taux d'impuretés dans le verre de départ, il reste généralement encore beaucoup d'impuretés après le lavage. Le textile ainsi obtenu ne présente pas une stabilité suffisante à haute température. De plus, le lavage du verre conduit à la formation d'une porosité dans la silice, et, avant utilisation, il est généralement nécessaire de procéder à un traitement thermique sévère (de l'ordre de 1100°C) de façon à faire diminuer la porosité des fils par frittage, ce qui s'accompagne cependant nécessairement d'un retrait indésirable. De plus, la porosité de tel fils n'est jamais totalement résorbée, et le tissu continue de montrer une certaine tendance au retrait au cours de son utilisation. En raison de sa porosité, le verre lavé présente une faible densité, inférieure à 2,15.

Pour palier aux inconvénients du verre lavé, on peut être tenté d'utiliser des silices ultra pures. Cependant, la demanderesse a par ailleurs découvert que les silices contenant un très faible taux d'Al et de Ti ont tendance à se ponter (par un mécanisme analogue à celui des phénomènes de frittage), ce qui est également néfaste à la stabilité des tissus soumis à des cycles chauffage/refroidissement.

Comme documents de l'état de la technique, on peut citer EP 0510653 (de même famille que US 5248637), GB 824972, US 3092531, EP 0160232 (de même famille que US 4786017).

Le fil de silice selon l'invention répond aux problèmes susmentionnés. Il présente une excellente tenue thermique, c'est-à-dire qu'il présente une très bonne stabilité (très faible tendance à cristalliser) à plus de 600°C, voire plus de 700°C, par exemple à moins de 1100°C, voire moins de 1200°C. Cette haute tenue thermique permet d'utiliser les objets réalisés à partir du fil selon l'invention pendant de longues durées aux températures précédemment mentionnées, par exemple au moins 100 heures, voire au moins 1000 heures, voire au moins 10000 heures. Notamment, le fil de silice selon l'invention permet la réalisation de textiles conservant une excellente flexibilité (c'est-à-dire une forte souplesse) après avoir été soumis aux traitements thermiques qui viennent d'être mentionnés. Au cours du traitement thermique, la souplesse du textile reste voisine de ce qu'elle était avant le traitement thermique, et elle peut même augmenter.

Le fil de silice selon l'invention trouve notamment une application pour la réalisation de textiles comme les tissus, tricots, tresses, textiles non-tissés (aiguilletés, feutres, mats, voiles). Les objets qui viennent d'être mentionnés peuvent être utilisés sans matrice entre les fils (dans le cas des tissus, on parle alors de tissus secs) comme pour les joints de fours ou les rideaux de fours. La réalisation d'une matrice céramique, par exemple par les techniques de CVI (chemical vapor infiltration) n'est cependant pas exclue.

L'invention concerne plus particulièrement les tissus de 300 g/m² à 1500 g/m² (généralement environ 600 g/m² et environ 1200 g/m²) sur des armures de type taffetas (« plain weave » en anglais), sergé (« twill » en anglais), satin de 8 ou de 12 (norme AFNOR XP B38-210 à XP B38-253). Sont également concernés par l'invention les feutres et nappes dont la densité va de 4 à 35 kg par m³ ainsi que les textiles aiguilletés dont la densité va de 90 à 200 kg par m^{3.}

Le fil de silice selon l'invention contient très majoritairement de la silice. Dans ce genre de composition très riche en silice, il est d'usage
1. de mentionner le taux d'impureté plutôt que la teneur en silice,
2. de caractériser les taux en impureté en donnant les teneurs en éléments chimiques et non pas les teneurs en oxydes (au contraire dé ce qui se pratique dans le domaine des verres beaucoup moins riches en silice).

Dans le cadre de la présente demande, on se conformera à cet usage en donnant par exemple la teneur en l'élément chimique Al, alors que dans le domaine du verre on aurait donné la teneur en Al₂O₃.

Dans le fil de silice selon l'invention, le taux d'impureté est au maximum de 5000 ppm en poids. Par impureté, on entend tout élément chimique différent de Si et O. Ceci signifie que si le fil de silice selon l'invention contient par exemple l'élément chimique Al, ce dernier étant nécessairement présent sous forme oxydée, on considère que les atomes d'Al sont des impuretés mais que les atomes d'oxygène liés aux atomes d'Al ne sont pas des impuretés. Les teneurs en impuretés sont déterminables de façon classique par spectrométrie d'absorption atomique passant par la mesure d'une longueur d'onde dans une flamme.

L'aluminium et le titane, tous deux sous forme oxydée sont présents dans le fil de silice selon l'invention.

Des alcalins, notamment soude, Na₂O, et potasse, K₂O, peuvent être introduits dans les compositions du fil de silice selon l'invention pour limiter les phénomènes de diffusion de surface des alcalins et ainsi limiter la sensibilité du fil de silice aux phénomènes de frittage et pontage des filaments entre eux lors d'exposition à de hautes températures. La composition peut contenir un seul oxyde alcalin (parmi Na₂O, K₂O et Li₂O) ou peut contenir une combinaison d'au moins deux oxydes alcalins.

Le bore, est connu dans les milieux verriers comme ayant une action ralentissant la dévitrification, peut être présent sous forme oxydée.

Les fils de silice selon l'invention sont obtenus à partir d'une composition à base de silice et comprenant les éléments suivants sous forme oxydée:

| | |
|---|---|
| aluminium : | 30 à 1500 ppm en poids, |
| titane : | 10 à 2000 ppm en poids et de préférence de 10 à moins de 200 ppm en poids. |

De plus la composition du fil est telle que les éléments chimiques suivants sont absents ou présents sous forme oxydée au maximum selon :

| | |
|---|---|
| bore : | moins de 600 ppm en poids, |
| sodium : | moins de 100 ppm en poids, |
| calcium : | moins de 100 ppm en poids, |
| potassium: | moins de 100 ppm en poids, |
| lithium : | moins de 100 ppm en poids. |

De plus, la composition du fil de silice selon l'invention est telle que les quantités mesurées en ppm en poids des éléments Al, K, Li et Na (représentées respectivement par ppm Al, ppm K, ppm Li, ppm Na) remplissent la condition suivante : ppm Al > ppm K + ppm Li + ppm Na . Dans le fil de silice selon l'invention, la masse en l'élément Al est donc de préférence supérieure à la somme de la masse des éléments K, Li et Na. De manière encore préférée, la masse en l'élément Al est supérieure à deux fois la somme de la masse des éléments K, Li et Na.

Par ailleurs, de préférence, tout élément différent de Si, O, Al, Ti, B, Na, Ca, K, Li éventuellement présent dans le fil de silice selon l'invention est présent à moins de 100 ppm en poids. De manière encore préférée, la somme des masses de tous les éléments différents de Si, O, Al, Ti, B, Na, Ca, K, Li est inférieure à 100 ppm en poids.

De préférence, le fil de silice selon l'invention est tel que la teneur en Al est supérieure à 80 ppm en poids.

De préférence, le fil de silice selon l'invention est tel que la teneur en Al est inférieure à 400 ppm en poids.

De préférence, le fil de silice selon l'invention est tel que la teneur en Ti est supérieure à 30 en poids.

De préférence, le fil de silice selon l'invention est tel que la teneur en Ti est inférieure à 200 ppm en poids.

De préférence, le fil de silice selon l'invention est tel que :
- la teneur en B est inférieure à 3 ppm en poids,
- la teneur en Na est inférieure à 50 ppm en poids,
- la teneur en Ca est inférieure à 60 ppm en poids,
- la teneur en K est inférieure à 80 ppm en poids,
- la teneur en Li est inférieure à 10 ppm en poids.

Notamment, une composition de silice préférée est telle que :
- la teneur en Al est comprise entre 30 et 400 ppm en poids, et de manière encore préférée entre 80 et 400 ppm en poids,
- la teneur en Ti est comprise entre 10 à 200 ppm en poids, et de manière encore préférée entre 30 et 200 ppm en poids,
- la teneur en B est inférieure à 3 ppm en poids,
- la teneur en Na est inférieure à 50 ppm en poids,
- la teneur en Ca est inférieure à 60 ppm en poids,
- la teneur en K est inférieure à 80 ppm en poids,
- la teneur en Li est inférieure à 10 ppm en poids,
et est tel que la somme des masses de tous les éléments différents de Si, O, Al, Ti, B, Na, Ca, K, Li est inférieure à 100 ppm en poids.

Notamment, une composition de silice particulièrement adaptée à l'invention est telle que :
- la teneur en Al est égale à environ 250 ppm en poids,
- la teneur en Ti est égale à environ 100 ppm en poids,
- la teneur en B est égale à environ 1 ppm en poids,
- la teneur en Na est égale à environ 20 ppm en poids,
- la teneur en Ca est égale à environ 35 ppm en poids,
- la teneur en K est égale à environ 50 ppm en poids,
- la teneur en Li est égale à environ 5 ppm en poids, la somme de tous les éléments différents de Si, O, Al, Ti, B, Na, Ca, K, Li étant inférieure à 100 ppm en poids.

Les compositions du fil de silice selon l'invention présentent une dévitrification notablement plus modérée que des compositions de domaines voisins.

Le fil de silice selon l'invention peut être réalisé par fibrage avec un rendement satisfaisant dans des conditions industrielles d'exploitation. Le fil selon l'invention peut ainsi être fibré comme les fils de silice fondue ou les fils de silice obtenus par les procédés sol gel.

Les fils obtenus se présentent sous la forme de fils continus dont le diamètre peut généralement aller de 5 à 300 microns, plus généralement de 6 à 60 µm et plus généralement encore de 6 à 15 µm.

Un procédé de filage utilisable dans le cadre de la présente invention est avantageusement le procédé utilisé de façon classique par l'homme du métier connaissant le filage de la silice. Selon ce procédé, des préformes de silice à la section généralement cylindrique, au diamètre allant généralement de 3 à 7 mm (plus généralement ayant un diamètre d'environ 5 mm) sont avancés dans une flamme capable de porter la composition entre 1800 et 2400 °C et le fil de silice est étiré dans la flamme. Dans ce cas, la préforme a au départ la composition recherchée pour le fil. La silice alimentant le procédé est généralement obtenue à partir de matières (ou produits ou composants ou matériaux) éventuellement pures (issues par exemple de l'industrie chimique) mais le plus souvent naturelles, ces dernières comprenant parfois des impuretés à l'état de traces, ces matières premières (pures ou naturelles) étant mélangées dans des proportions appropriées pour obtenir la composition désirée, puis étant fondues. La température de la silice fondue (et donc sa viscosité) est réglée de façon traditionnelle par l'opérateur de façon à permettre le fibrage et de façon à obtenir la meilleure qualité possible de fil. Le cône de fibrage doit être suffisamment stable. A l'endroit dudit cône, la matière doit être suffisamment visqueuse pour être filable mais suffisamment fluide pour limiter les risques de casse du fil. La température de la composition est réglée en conséquence en jouant sur l'énergie et la température de la flamme. On peut également jouer sur la force de traction exercée en aval du fibrage et donc sur la vitesse de celui-ci. Avant leur rassemblement sous forme de fils, les filaments sont généralement revêtus d'une composition d'ensimage (choisie de façon traditionnelle en fonction notamment de la destination des fils) permettant de les protéger de l'abrasion et facilitant leur manipulation et leur transformation en matière textile en limitant les risques de casse. De préférence, la composition d'ensimage contient le moins possible d'éléments chimiques alcalin et alcalino-terreux, c'est-à-dire que la somme de la masse de Na, K, Li, Ca, représente moins de 100 ppm en poids et de manière encore préférée moins de 10 ppm en poids de la composition d'ensimage. Par ce procédé, le fil de silice selon l'invention peut être filé avec une vitesse allant par exemple de 10 à 300 km/heure. Le fil de silice obtenu par ce procédé qui ne fait pas intervenir de lavage par des acides, présente une densité élevée, supérieure à 2,15, allant généralement de 2,15 à 2,21 et présente de fait une très faible tendance au retrait, pouvant être inférieur à 0,5 %, lorsqu'il est chauffé à haute température:

On peut également utiliser la technique du verre lavé en partant d'un verre ou d'une silice présentant un plus fort taux d'impuretés que dans le cas du procédé précédent. Dans le cas d'un verre, on peut utiliser la technique habituelle de filage du verre, par des filières chauffées par effet joule. Après filage, les fils sont de préférence ensimés (par exemple de façon classique), puis transformé en textile, puis lavé par des acides de façon à aboutir aux teneurs en impuretés souhaitées. Dans ce cas, le lavage conduit généralement à l'élimination de la composition d'ensimage, ce qui n'est pas gênant à ce stade puisque les fils sont déjà transformés en textile. Dans ce cas, on peut donc utiliser une composition d'ensimage présentant un plus fort taux d'alcalin et d'alcalino-terreux que pour le procédé précédent. Dans le cas de ce procédé, tout en présentant l'excellente stabilité liée à sa composition, le fil peut alors également présenter les inconvénients découlant de sa porosité résiduelle.

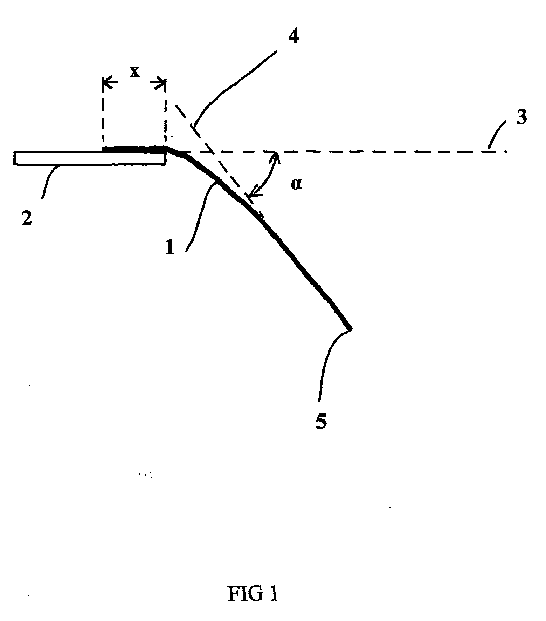

La figure 1 illustre l'un des principes de mesure de la tenue de tissus à haute température pour les exemples qui suivent. Pour ce test, le tissu (1) est, après traitement thermique, collé sur une plaque d'acier (2) sur une longueur x. On mesure alors l'angle alpha formé entre la tangente (4) au tissu passant par le bord (5) non situé sur la plaque d'acier et l'horizontale (3).

### EXEMPLES 1 à 6

On compare des compositions de silice dont les caractéristiques sont rassemblées dans le tableau 1 ci-dessous :

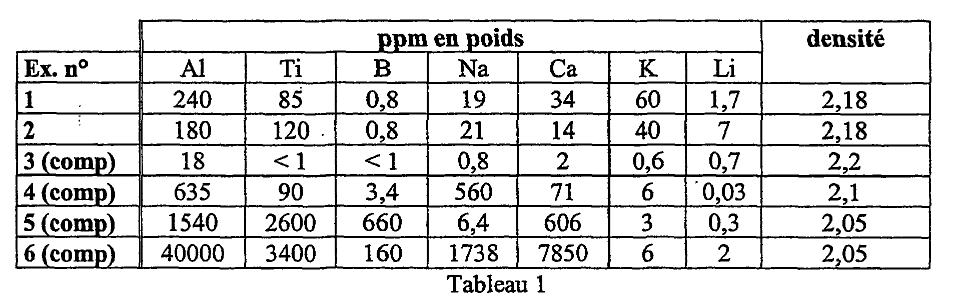

La silice de l'exemple 4 est une silice de type sol gel de marque ENKA SILICA commercialisée par la société ENKA La silice de l'exemple 3 est une silice de marque QUARTZEL commercialisé par la société SAINT-GOBAIN QUARTZ S.A. La silice de verre lavé de l'exemple 5 était de marque REFRASIL et était commercialisée par la société HITCO. La silice de verre lavé de l'exemple 6 était de marque SILTEMP et était commercialisée par la société AMETEK.
Les compositions des silices des exemples 1 et 2 étaient préparées par fusions à partir de silices naturelles ou issues de pegmatite. Des fils ont été réalisés par la technique classique de filage de fil de silice. Ces fils ont ensuite été ensimés de façon classique. Pour tous les exemples les fils avaient un diamètre compris entre 5 et 14 µm.
Des satins de 8 de 600g/m2 fils de verre ont été réalisés à partir des fils.
La tenue des tissus à haute température a été testée par le test ASTM 1388 après exposition à 1000°C. Le tableau 2 donne les valeurs de rigidité en flexion G en mg.cm, G étant obtenu par la formule G=M.C³ dans laquelle M représente la masse surfacique du tissu en mg/cm² et C représente la longueur « sous flexion » en cm, obtenues après 10, 100 ou 1000 heures à l'air à 1000°C ainsi que la valeur avant traitement thermique (durée = 0). Plus la valeur est forte, plus le textile est rigide. Comme l'on recherche des textiles conservant une bonne souplesse (contraire de rigidité) lors du traitement thermique, on recherche donc des valeurs de rigidité voisines de celles de départ voire légèrement inférieures.

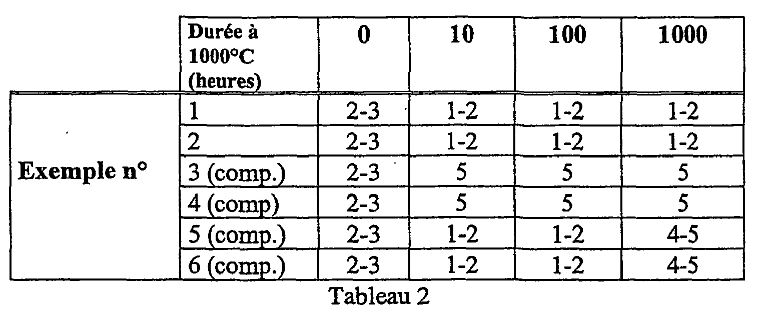

On remarque que les exemples selon l'invention correspondent aux valeurs de rigidité les plus faibles, ce qui traduit bien le fait que les textiles correspondants ont conservé leur souplesse pendant le traitement thermique, voire que ladite souplesse s'est légèrement accrue au cours de ce traitement thermique, ce qui est favorable. Au contraire, la rigidité des textiles des exemples comparatifs s'est accru lors du traitement thermique.
Les tissus ont également été testés par mesure de l'angle par rapport à l'horizontal d'une éprouvette de tissus (principe de la figure 1). Pour ce faire, on a découpé des éprouvettes en chaîne et trame de 100 mm de longueur par 25 mm de largeur. Ces éprouvettes ont ensuite été portées à 1000 °C pendant 1000 heures. On les a ensuite collées sur une longueur de 30 mm (x = 30 mm) sur une plaque d'acier et l'on a alors mesuré l'angle alpha formé entre le tissu et l'horizontale. Une plus forte valeur d'angle traduit un matériau plus souple. On recherche donc un textile donnant une valeur d'angle voisine de celle de départ, voire légèrement plus forte. Les résultats de mesures d'angles sont rassemblés dans le tableau 3 ci-dessous.

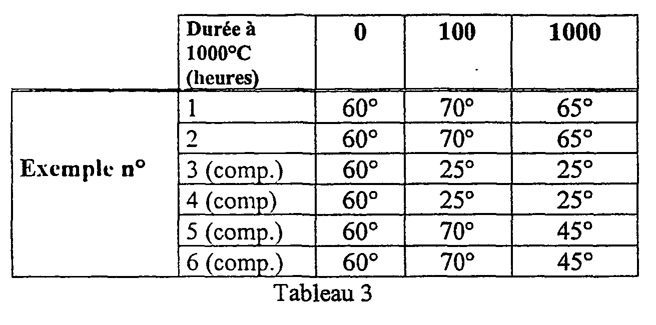

Ces résultats indiquent que les textiles selon l'invention ont conservé une souplesse voisine de celle de départ, voire légèrement supérieure à celle de départ au cours du traitement thermique, ce qui est favorable, puisque l'angle formé entre le tissu et l'horizontale s'est accru. Pour les exemples comparatifs, la valeur de l'angle ayant diminué, cela traduit le fait qu'il sont au contraire devenu plus rigides au cours du traitement thermique.

## Revendications

1. Fil de silice comprenant de l'aluminium et du titane sous forme oxydée, la somme de la masse des éléments chimiques différents de Si et O étant inférieure à 5000 ppm en poids, les teneurs en aluminium et en titane étant les suivantes :
| | |
|---|---|
| aluminium: | 30 à 1500 ppm en poids, |
| titane : | de 10 à moins de 200 ppm en poids, |
les éléments suivants étant absents ou présents sous forme oxydée au maximum selon :
| | |
|---|---|
| bore : | moins de 600 ppm en poids, |
| sodium : | moins de 100 ppm en poids, |
| calcium : | moins de 100 ppm en poids, |
| potassium : | moins de 100 ppm en poids, |
| lithium : | moins de 100 ppm en poids. |

2. Fil selon la revendication précédente **caractérisé en ce que** que la teneur en Al est comprise entre 30 et 400 ppm en poids.

3. Fil selon la revendication précédente **caractérisé en ce que** que la teneur en Al est comprise entre 80 et 400 ppm en poids.

4. Fil selon la revendication précédente **caractérisé en ce que** que la teneur en Ti est comprise entre 30 et 200 ppm en poids.

5. Fil selon l'une des revendications précédentes **caractérisé en ce que** la masse de l'élément Al est supérieure à la somme de la masse des éléments K, Li et Na.

6. Fil selon l'une des revendications précédentes **caractérisé en ce que** la masse en l'élément Al est supérieure à deux fois la somme de la masse des éléments K, Li et Na.

7. Fil selon l'une des revendications précédentes **caractérisé en ce que** tout élément différent de Si, O, Al, Ti, B, Na, Ca, K, Li présent dans le fil de silice est présent à moins de 100 ppm en poids.

8. Fil selon l'une des revendications précédentes **caractérisé en ce que** la somme de tous les éléments différents de Si, O, Al, Ti, B, Na, Ca, K, Li est inférieure à 100 ppm en poids.

9. Fil selon l'une des revendications précédentes **caractérisé en ce que**
la teneur en B est inférieure à 3 ppm en poids,
la teneur en Na est inférieure à 50 ppm en poids,
la teneur en Ca est inférieure à 60 ppm en poids,
la teneur en K est inférieure à 80 ppm en poids,
la teneur en Li est inférieure à 10 ppm en poids.

10. Fil selon l'une des revendications précédentes **caractérisé en ce que** son diamètre va de 5 à 300 microns.

11. Fil selon la revendication précédente **caractérisé en ce que** son diamètre va de 6 à 60 µm.

12. Fil selon la revendication précédente **caractérisé en ce que** son diamètre va de 6 à 15 µm.

13. Fil selon l'une des revendications précédentes **caractérisé en ce que** sa densité va de 2,15 à 2,21.

14. Textile comprenant un fil de l'une des revendications précédentes.

15. Textile selon la revendication précédente **caractérisé en ce qu'**il est un tissu ou un tricot ou une tresse ou un textile non-tissé.

16. Textile selon la revendication précédente **caractérisé en ce qu'**il est un tissu de 300 à 1500 g/m2.

17. Textile selon l'une des revendications précédentes **caractérisé en ce qu'**il est un joint de four ou un rideau de four.

18. Utilisation d'un textile selon l'une des revendications de textile précédentes à plus de 600°C.

19. Utilisation selon l'une des revendications de textile précédentes à plus de 700°C.

20. Utilisation selon l'une des revendications d'utilisation précédentes **caractérisé en ce qu'**elle a lieu à moins de 1200°C.

21. Utilisation selon l'une des revendications d'utilisation précédentes **caractérisé en ce qu'**elle a lieu à moins de 1100°C.

22. Utilisation selon l'une des revendications d'utilisation précédentes, **caractérisé en ce qu'**elle a lieu pendant au moins 100 heures. -

23. Utilisation selon la revendication précédente **caractérisé en ce qu'**elle a lieu au moins pendant 1000 heures.

24. Utilisation selon la revendication précédente **caractérisé en ce qu'**elle a lieu au moins pendant 10000 heures.

## Claims

1. A silica yarn containing aluminum and titanium in oxidized form, the sum of the mass of the chemical elements different from Si and O being less than 5000 ppm by weight, the aluminum and titanium contents being the following:
| | |
|---|---|
| aluminum: | 30 to 1500 ppm by weight; |
| titanium: | from 10 to less than 200 ppm by weight; |
the following elements being absent or present in oxidized form at most as follows:
| | |
|---|---|
| boron: | less than 600 ppm by weight; |
| sodium: | less than 100 ppm by weight; |
| calcium: | less than 100 ppm by weight; |
| potassium: | less than 100 ppm by weight; |
| lithium: | less than 100 ppm by weight. |

2. The yarn as claimed in the preceding claim, **characterized in that** the Al content is between 30 and 400 ppm by weight.

3. The yarn as claimed in the preceding claim, **characterized in that** the Al content is between 80 and 400 ppm by weight.

4. The yarn as claimed in the preceding claim, **characterized in that** the Ti content is between 30 and 200 ppm by weight.

5. The yarn as claimed in one of the preceding claims, **characterized in that** the mass of the element Al is greater than the sum of the mass of the elements K, Li and Na.

6. The yarn as claimed in one of the preceding claims, **characterized in that** the mass of the element Al is greater than twice the sum of the mass of the elements K, Li and Na.

7. The yarn as claimed in one of the preceding claims, **characterized in that** any element different from Si, O, Al, Ti, B, Na, Ca, K and Li present in the silica yarn according to the invention is present at less than 100 ppm by weight.

8. The yarn as claimed in one of the preceding claims, **characterized in that** the sum of the masses of all the elements different from Si, O, Al, Ti, B, Na, Ca, K and Li is less than 100 ppm by weight.

9. The yarn as claimed in one of the preceding claims, **characterized in that**:
- the B content is less than 3 ppm by weight;
- the Na content is less than 50 ppm by weight;
- the Ca content is less than 60 ppm by weight;
- the K content is less than 80 ppm by weight; and
- the Li content is less than 10 ppm by weight.

10. The yarn as claimed in one of the preceding claims, **characterized in that** its diameter ranges from 5 to 300 microns.

11. The yarn as claimed in the preceding claim, **characterized in that** its diameter ranges from 6 to 60 µm.

12. The yarn as claimed in the preceding claim, **characterized in that** its diameter ranges from 6 to 15 µm.

13. The yarn as claimed in one of the preceding claims, **characterized in that** its density ranges from 2.15 to 2.21.

14. A fabric comprising a yarn of one of the preceding claims.

15. The fabric as claimed in the preceding claim, **characterized in that** it is a woven or a knit or a braid or a nonwoven fabric.

16. The fabric as claimed in the preceding claim, **characterized in that** it is a 300 to 1500 g/m² woven.

17. The fabric as claimed in one of the preceding claims, **characterized in that** it is a furnace seal or a furnace curtain.

18. The use of a fabric as claimed in one of the preceding fabric claims at above 600°C.

19. The use of a fabric as claimed in one of the preceding fabric claims at above 700°C.

20. The use as claimed in one of the preceding use claims, **characterized in that** it takes place at below 1200°C.

21. The use as claimed in one of the preceding use claims, **characterized in that** it takes place at below 1100°C.

22. The use as claimed in one of the preceding use claims, **characterized in that** it takes place for at least 100 hours.

23. The use as claimed in one of the preceding use claims, **characterized in that** it takes place for at least 1000 hours.

24. The use as claimed in one of the preceding use claims, **characterized in that** it takes place for at least 10000 hours.

## Patentansprüche

1. Siliciumdioxidfaden, der Aluminium und Titan in oxidierter Form enthält, wobei die Summe der Masse der chemischen Elemente, die kein Si und O sind, kleiner als gewichtsbezogene 5 000 ppm ist und der Aluminium- und Titangehalt folgender ist:
| | |
|---|---|
| Aluminium: | 30 bis 1 500 ppm, gewichtsbezogen, |
| Titan: | 10 bis weniger als 200 ppm, gewichtsbezogen, |
und gegebenenfalls folgende Elemente in oxidierter Form maximal vorhanden sind:
| | |
|---|---|
| Bor: | weniger als 600 ppm, gewichtsbezogen, |
| Natrium: | weniger als 100 ppm, gewichtsbezogen, |
| Calcium: | weniger als 100 ppm, gewichtsbezogen, |
| Kalium: | weniger als 100 ppm, gewichtsbezogen, |
| Lithium: | weniger als 100 ppm, gewichtsbezogen. |

2. Faden nach dem vorhergehenden Anspruch, **dadurch gekennzeichnet, dass** der Al-Gehalt 30 bis 400 ppm, gewichtsbezogen, beträgt.

3. Faden nach dem vorhergehenden Anspruch, **dadurch gekennzeichnet, dass** der Al-Gehalt 80 bis 400 ppm, gewichtsbezogen, beträgt.

4. Faden nach dem vorhergehenden Anspruch, **dadurch gekennzeichnet, dass** der Ti-Gehalt 30 bis 200 ppm, gewichtsbezogen, beträgt.

5. Faden nach einem der vorhergehenden Ansprüche, **dadurch gekennzeichnet, dass** die Masse des Elements Al größer als die Summe der Massen der Elemente K, Li und Na ist.

6. Faden nach einem der vorhergehenden Ansprüche, **dadurch gekennzeichnet, dass** die Masse des Elements Al größer als das Zweifache der Summe der Massen der Elemente K, Li und Na ist.

7. Faden nach einem der vorhergehenden Ansprüche, **dadurch gekennzeichnet, dass** jedes Element, das kein Si, O, Al, Ti, B, Na, Ca, K und Li ist und in dem Siliciumdioxidfaden enthalten ist, mit weniger als 100 ppm, gewichtsbezogen, vorliegt.

8. Faden nach einem der vorhergehenden Ansprüche, **dadurch gekennzeichnet, dass** die Summe aller Elemente, die kein Si, O, Al, Ti, B, Na, Ca, K und Li sind, weniger als 100 ppm, gewichtsbezogen, beträgt.

9. Faden nach einem der vorhergehenden Ansprüche, **dadurch gekennzeichnet, dass** der
B-Gehalt weniger als 3 ppm, gewichtsbezogen,
Na-Gehalt weniger als 50 ppm, gewichtsbezogen,
Ca-Gehalt weniger als 60 ppm, gewichtsbezogen,
K-Gehalt weniger als 80 ppm, gewichtsbezogen, und
Li-Gehalt weniger als 10 ppm, gewichtsbezogen,
beträgt.

10. Faden nach einem der vorhergehenden Ansprüche, **dadurch gekennzeichnet, dass** sein Durchmesser 5 bis 300 Mikrometer beträgt.

11. Faden nach dem vorhergehenden Anspruch, **dadurch gekennzeichnet, dass** sein Durchmesser 6 bis 60 µm beträgt.

12. Faden nach dem vorhergehenden Anspruch, **dadurch gekennzeichnet, dass** sein Durchmesser 6 bis 15 µm beträgt.

13. Faden nach einem der vorhergehenden Ansprüche, **dadurch gekennzeichnet, dass** sein spezifisches Gewicht 2, 15 bis 2,21 beträgt.

14. Textilerzeugnis, das einen Faden nach einem der vorhergehenden Ansprüche umfasst.

15. Textilerzeugnis nach dem vorhergehenden Anspruch, **dadurch gekennzeichnet, dass** es ein Gewebe, eine Maschenware, ein Geflecht oder ein Nonwoven ist.

16. Textilerzeugnis nach dem vorhergehenden Anspruch, **dadurch gekennzeichnet, dass** es ein Gewebe mit einem Flächengewicht von 300 bis 1 500 g/m² ist.

17. Textilerzeugnis nach einem der vorhergehenden Ansprüche, **dadurch gekennzeichnet, dass** es eine Ofendichtung oder ein Ofenvorhang ist.

18. Verwendung eines Textilerzeugnisses nach einem der vorhergehenden es betreffenden Ansprüche bei über 600 °C.

19. Verwendung nach einem der vorhergehenden das Textilerzeugnis betreffenden Ansprüche bei über 700 °C.

20. Verwendung nach einem der vorhergehenden Verwendungsansprüche, **dadurch gekennzeichnet, dass** sie bei weniger als 1 200 °C stattfindet.

21. Verwendung nach einem der vorhergehenden Verwendungsansprüche, **dadurch gekennzeichnet, dass** sie bei weniger als 1 100 °C stattfindet.

22. Verwendung nach einem der vorhergehenden Verwendungsansprüche, **dadurch gekennzeichnet, dass** sie mindestens 100 Stunden lang stattfindet.

23. Verwendung nach dem vorhergehenden Anspruch, **dadurch gekennzeichnet, dass** sie mindestens 1 000 Stunden lang stattfindet.

24. Verwendung nach dem vorhergehenden Anspruch, **dadurch gekennzeichnet, dass** sie mindestens 10 000 Stunden lang stattfindet.
